# EUROPEAN PATENT SPECIFICATION

(11) **EP 1 854 642 B1**
(45) Date of publication and mention of the grant of the patent: **27.05.2015**
(21) Application number: 07251793.1
(22) Date of filing: 28.04.2007
(51) Int. Cl.: B42D 15/00, G03H 1/02

(54) **A security device formed by a hologram and a color shifting ink**
Sicherheitsvorrichtung aus einem Hologramm und einer farbwechselnden Tinte
Dispositif de sécurité formé par un hologramme et une encre de distorsion des couleurs

(30) Priority: 12.05.2006 US 747142 P
(43) Date of publication of application: 14.11.2007
(73) Proprietor: JDS Uniphase Corporation, Milpitas, CA 95035 (US)
(72) Inventor: Phillips, Roger W., Santa Rosa California 95405 (US); Taguer, Elena, Ottawa Ontario K2L 2M9 (CA)
(74) Representative: McKechnie, Neil Henry

(56) References cited:
- US-A- 5 331 443
- US-A- 5 766 738

## Description

### FIELD OF THE INVENTION

The present invention is related to forming a label on a surface of an object by printing optically variable ink onto the object and adhesively bonding, for example by hot-stamping, a patterned structure, such as a hologram, onto the optically variable ink.

### BACKGROUND OF THE INVENTION

Security labels, also referred to as optical security devices, are used for protection of various objects from counterfeiting. Such objects include paper documents, banknotes, commercial articles, packaging, etc. Conventionally, security labels are adhesively bonded or hot stamped to a surface of an object or packaging.

One kind of security label is an optical structure that exhibits the effects of stamped or etched surface relief patterns, such as holograms or diffractive gratings, together with a pattern such as alphanumeric characters, bar codes, or graphical or pictorial designs, and additional optical effects in the regions around such pattern. Such structures are described in United States Patent application 20060077496 in the name of Argoitia et al. published April 13, 2006.

Another kind of security label, also referred to as a chromagram, includes an optical structure that has a patterned or windowed substrate together with special effect coatings or layers supported by or supporting the patterned or windowed substrate. Chromagrams of various designs are known from patents and patent applications by the inventors, and used for enhancing security and aesthetic appeal of products.

By use of the term "patterned" layer, it is meant that a reflective or non-reflective, opaque or partially transmissive layer is applied over a substrate which may be planar or have a surface relief pattern therein, in a manner that forms a desired "pattern" or design. By way of non-limiting examples, the patterned reflective layer can be formed in the shape of letters, numerals, bar codes and/or graphical or pictorial designs.

United States Patent 6,987,590 in the name of Phillips et al. discloses an optical device that includes a light transmissive substrate having a surface relief pattern applied thereon, in the form of a hologram. In fabricating this optical device, a patterned layer of a reflective material is applied over portions of the surface relief pattern to form alphanumeric characters, bars codes, or pictorial or graphical designs. An optically active coating is deposited or applied as an ink or paint over the patterned layer of the reflective material and exposed portions of the surface relief pattern in order to provide desirable optical effects to the exposed portions of the surface relief pattern. In some embodiments, the optically active coating is a color shifting thin film, or contains color shifting flakes. Optionally, the material of the optically active coating is index matched to the light transmissive substrate in order to optically erase the effect of the surface relief pattern in the portions of the surface relief pattern not covered by the reflective material. This aforementioned patent application provides an optical structure having a light transmissive substrate having a surface relief pattern formed thereon; a patterned layer of a reflective material applied onto portions of the surface relief pattern of the light transmissive substrate, such that some portions of the surface relief pattern are covered by the reflective material, and other portions of the surface relief pattern are exposed. The structure further has an optically active coating underlying the patterned layer and exposed portions of the surface relief pattern. This structure is a type of chromagram.

Another chromagram-type structure is described in United States Patent application 20050128543 in the name of Phillips et al. In this publication patterned substrates having windowed regions that one can see through, are coated with optically variable coatings or optically variable inks that can be seen through the windows.

Optically variable (OV) coating is understood as a coating providing optically variable effects, for example an observable color shift as the angle of incident light or viewing angle changes. For example, the optical coating can be a multilayer optical interference film such as a three layer optical stack of absorber-dielectric-reflector, or alternating layers of low and high index of refraction dielectric layers. In addition, the optical coating can be formed from a plurality of multilayer optical interference flakes dispersed in a polymeric medium such as a color shifting ink. Another example of an OV coating is a tinted medium with reflective flakes dispersed therein. However this type of coating is not color shifting. Its variable effects appear as light and darker colors of the color of the tinted medium.

The aforementioned chromagrams combine security features of a hologram and an optically variable coating for enhanced protection. However, advanced security features increase the complexity and cost of protected objects. Accordingly, it is desired to provide a simple and cost effective method of protecting an object with a security label, simpler and less expensive than application of conventional chromagrams, while providing the same advanced security features.

Security devices providing holographic and OV effects, including Chromagrams, can be divided in two groups by a method of manufacturing. One group encompasses devices formed by covering a holographic structure by an OV coating, for example, a thin-film stack or a color shifting flakes in a polymeric coating. Devices of the second group have a first substrate with a hologram formed therein or thereon, adhesively bound, preferably by hot stamping, to a second substrate having an OV coating formed thereon.

The field of hot stamping and more particularly, hot stamping of one optical coating or substrate with another is well known. For example, coated substrates bearing images, logos or other indicia are hot stamped onto lottery cards, passports, banknotes, driver's licenses, poker chips, and a variety of other articles and substrates are well known.

Hot stamping is described or mentioned in the United States patents 5,002,312, US 5,059,245, US 5,135,812, US 5,171,363, US 5,186,787, US 5,279,657 and 7005178, in the name of Phillips et al. One commercially available machine for hot stamping images onto substrates is the Malahide E4-PK produced by Malahide Design and Manufacturing Inc. Machines of this type are shown and described on the Internet at www.hotstamping.com. Simplistically, in a hot-stamping process, a die is attached to the heated plate which is pressed against a load roll of hot stamping foil to affix the foil to an article or substrate.

Devices of both groups are disclosed for example in WO0153113 application by Phillips et al. and US Patent No. 7,054,042 to Holmes et al.

WO0153113 discloses various security articles formed by laminating laser imaged optical coating structures to embossed substrates, wherein the laminated articles include either a color shifting foil or ink, which can be used as the background underneath a holographic image. '042 discloses optically decoupled devices comprising a relief structure laminated with an optically clear adhesive to a prefabricated thin film reflective structure consisting of a reflective layer, one or more dielectric layers, and a semi-transparent metal layer.

Conventionally, when a security device of either type is used to protect a valuable object such as a document, a banknote, or any other object, the device is adhesively coupled to the object by an external adhesive layer. Therefore, devices of the second group have two adhesive layers: an internal adhesive layer for coupling the holographic structure to the OV structure and an external adhesive layer for coupling the resulting device to the object.

It is an object of this invention to reduce a cost of protecting an object by eliminating one of the two adhesive layers and one of the two substrates, while enabling the same security features as provided by security devices of the second group. It is an object of the present invention to enable such security feature as an image having combined holographic and color shifting effects, by using a security label simpler than devices of the first or second types. It is also an object of the present invention to simplify the method of protecting an object by eliminating the step of applying an external adhesive layer and forming a security label on the surface of the object.

A security device from the second group, prefabricated by applying an OV coating onto a diffractive structure, such as a hologram, and then adhesively bonded to an object, has the OV coating only in the area of the hologram. However, an additional security feature can be provided by an OV ink pattern on the surface of the object, e.g. a banknote, extending beyond the boundaries of the hologram label so that the ink design runs from one part of the banknote to the other. For example, an image of a duck is printed on the banknote in color shifting ink, but only its head is holographic in appearance. The head is where the hologram is stamped. This arrangement would be difficult to make using a prefabricated hologram covered with OV ink; it would require application of OV ink in two steps - to the hologram and to the object, and a precise registration of these two images. It is an object of the present invention to provide a method for forming a security label on an object, wherein an OV pattern extends beyond the diffractive image formed by the label. It is further an object of the present invention to provide a method of manufacturing an object with a security label formed thereon, wherein an OV pattern on the object and an OV background of the security label are formed in one step.

Possible security breaches related to labels manufactured separately and attached to objects, are associated with transferring a label from a genuine document to a counterfeit one, or attaching wrongfully obtained security labels to counterfeit products. Such problems can be eliminated by using security substrates, wherein special optical effects are provided by substrates of the objects themselves and not by attached labels. An example of security substrates can be found in US Pat. No. 6,686,027 in the name of Caporaletti et al. disclosing a plastic substrate with build in color shifting security threads.

While providing a higher level of anti-counterfeit protection, substrates like disclosed in US Pat. No. 6,686,027 have significantly higher manufacturing cost than small security labels, in particular, because the whole object-size substrate has to be processed in a vacuum camera. The way of manufacturing such substrates imposes another limitation, namely on a material of the substrate, specified in US Pat. No. 6,686,027 as a polymer.

It is an object of the present invention to provide a cost effective security substrate without limiting the material it is made of. In particular, it is an object of the present invention to provide a paper substrate for use in banknotes or paper documents.

It is known in the art that special inks printed onto paper documents can be used as security features. One particular type of special inks is an optically variable (OV) ink providing an optical effect dependent on a viewing angle. For example, US Pat. No. 7,029,525 to Mehta teaches printing a paper document with water based color shifting ink.

While application of OV ink is convenient and not expensive, by itself it provides only a moderate level of security. Accordingly, the present invention combines security features provided by the OV ink and a diffractive structure.

In addition, by printing OV ink directly onto the banknote, the ink is forced into the banknote fibers and thus the banknote becomes more secure as ink penetration can be observed by analytical methods. Such penetration would not occur with a prefabricated hologram with OV ink since a hot stamp adhesive would be between the banknote fibers and the OV coating. Another object of this invention is to allow two separate security features to be made in separate locations and then joined together where the product to be secured is made. This provides additional security since a prefabricated security label, such as a hologram with an OV coating, could be seized in transit, thus compromising the article to be protected.

Document US-A-5766738 discloses an article comprising a substrate and a coating of optically variable ink applied onto the substrate.

Various types of diffractive structures can be used while forming a security label according to the present invention. A patterned by demetallization hologram or a windowed hologram together with a color shifting coating allow for light impinged onto the hologram to reach the color shifting coating underneath thus enabling a synergy of diffractive and color shifting optical effects.

A patterned layer of a reflective material may be applied over predetermined portions of the holographic substrate to form alphanumeric characters, bar codes, pictorial or graphic designs. A highly reflective material, such as aluminum, is deposited on the surface of the holographic substrate and etched out off predetermined portions of the substrate. As a result of demetallizing, the areas of the substrate where the metal was etched out become essentially transparent and the holographic effect there becomes almost invisible. In contrast, the portions of the substrate where the reflective metal was left on the surface in different predetermined shapes, maintain visible holographic properties.

It is another object of this invention to provide a synergy of diffractive and OV effects by using a demetallized or windowed hologram optically coupled by an adhesive layer to an OV coating underneath.

### SUMMARY OF THE INVENTION

In accordance with one aspect of this invention, a method according to claim 1 object is provided.

Preferably, the patterned structure to be utilized by the method of the present invention is a diffractive structure comprising one of: a semi transparent reflective layer, a high refraction index layer, and a patterned reflective coating, whereby the image formed by the label has a holographic effect provided by the diffractive structure and an optically variable effect provided by the optically variable ink.

In accordance with yet another aspect of this invention, an article is provided according to claim 13.

In an embodiment of this invention, optically variable ink is first printed on a banknote of a paper document followed by hot-stamp process bonding together the optically variable ink layer with a substrate having a windowed hologram.

In an aspect of the invention, the optically variable ink can be seen through portions of the demetallized hologram or both can be seen at the same time.

In accordance with the invention, an optical structure is provided wherein a demetallized hologram is hot stamped on to an optically variable foil.

### BRIEF DESCRIPTION OF THE DRAWINGS

To further clarify the above and other advantages and features of the present invention, a more particular description of the invention will be rendered by reference to specific embodiments thereof that are illustrated in the appended drawings. It is to be appreciated that these drawings depict only typical embodiments of the invention and are therefore not to be considered limiting of its scope. The invention will be described and explained with additional specificity and detail through the use of the accompanying drawings in which:

Fig. 1 is a cross-sectional view of a Chromagram formed in accordance with one embodiment of the present invention.

Fig. 2 is a cross sectional view of a patterned structure in the chromagram shown in Fig. 1.

Fig. 3 is a cross-sectional view of a Chromagram formed on a banknote.

Fig. 4 is a cross-sectional view of a Chromagram, wherein the adhesive contains covert flakes or a low concentration of optically variable flakes or optically variable magnetic flakes.

Fig. 5 is a cross-sectional view of a Chromagram wherein a grating is supported by, or formed therein, a layer of high refraction index material.

Fig. 6 is a cross-sectional view of a Chromagram wherein a demet hologram is supported by a layer of high refraction index material.

Fig. 7 is a schematic depiction of forming the Chromagram shown in Fig. 6.

### DETAILED DESCRIPTION

According to the present invention, a security label, or chromagram, is formed on a surface of an object by printing optically variable ink onto the surface and then adhesively bonding a patterned structure thereon.

The optically variable ink comprises a carrier medium with OV flakes dispersed therein. It should be appreciated that carrier media can be of various types. For example, a water-based OV ink is disclosed in US Pat. No. 7,029,525 in the name of Mehta, and a polymer-based OV ink is taught in US Pat. No. 5,279,657 in the name of Phillips et al. By way of example, the carrier of the OV ink is acrylic- or urethane-based ink. It should be understood that a thicker carrier with OV flakes therein, also called OV paint, is considered to be a type of the OV ink for the purpose of this application. In some embodiments, the carrier is tinted and/or contains magnetic particles.

The OV flakes can be color shifting flakes such as disclosed in US Pat. No. 6,751,022 in the name of Phillips and US Patent No. 6,749,777 in the name of Argoitia et al., reflective flakes, magnetic reflective or magnetic color shifting flakes such as disclosed in US 6,818,299 to Phillips and in US 6,586,098 to Coulter et al.

The reflective flakes are preferably used in a tinted medium for some applications. Both, the color shifting and reflective flakes provide optical effects that vary with viewing angle.

The optically variable ink can be utilized in various printing processes, such as lithographic printing, flexographic printing, letterpress printing, intaglio printing, gravure printing, screen printing, ink jet printing, and by electrostatic printing.

According to the teachings of the present invention, the OV ink is applied directly onto the object, which means that the surface of the object can be covered with ink, paint, or lacquer, which is understood to be a portion of the object. "Applied directly onto the object" has a meaning opposite to applying OV ink onto a substrate separate from the object and then bonding this ink-covered substrate to the object. "Applied directly" means that no other substrates are disposed between the OV coating and the substrate of the object to be protected or decorated by the method of the present invention.

The method of the present invention allows forming a security label on a wide variety of objects, including large size objects and objects made of paper, plastic, metal, etc. This is a significant departure from the aforedescribed conventional method of forming a security label on a polymeric substrate and then bonding the label to an object.

According to the present invention, a security label is formed on a surface of an object by adhesively bonding a patterned structure to the coating of OV ink with an adhesive, which may be an energy activated adhesive.

For the purpose of this application, the term "energy activated adhesive" means a bonding substance that requires an energy source for curing. The energy activated adhesives include, but are not limited to, hot stamp adhesives, UV or e-beam activated adhesives, thermoplastic and thermoset adhesives, paint-based polymeric compositions, varnishes, and staining compositions. By way of example, an adhesive is selected from the group of: polymethacrylate, polyacrylate, polyamide, nitrocellulose, alkyd resin, polyvinyl alcohol, polyvinyl acetate, and polyurethane.

The methods of activating the adhesives include hot stamping, UV curing, applying heat, pressure, or a beam of electrons. For brevity, an energy activated adhesive, possibly with special particles therein, is referred to as "an adhesive" hereinbelow.

The adhesive may be printed into patterns or flood coated over the entire surface. If patterned, the product becomes more tamper proof since the product can not be physically removed in one piece. Attempts to remove the device by dissolving the adhesive using solvents would also be detrimental since the solvent would also attack the hardcoat/release which in turn would destroy the device, making tampering obvious.

Preferably, the adhesive is applied to the patterned structure, however in different embodiments of the present invention the adhesive can be applied and cured upon either a patterned structure or over the OV ink, or both, prior to bonding the two surfaces together.

The method disclosed in the present application makes use of a patterned structure, which in one embodiment of the present invention consists of a patterned coating on a substrate, wherein the substrate is optionally removable in the process of forming a security label on a surface of an object printed with OV ink.

In other embodiments the patterned structure can take various conventional forms of a diffractive structure, including diffraction patterns such as diffraction gratings, refraction patterns, holographic patterns such as two-dimensional and three-dimensional holographic images, demetallized holograms, coatings with varied index of refraction, light transmissive dielectric coatings with refractive flakes therein or thereon, Kinegram^{R} devices, Pixelgram^{R} devices, corner cube reflectors, zero order diffraction structures, moiré patterns, and light interference patterns based on microstructures having dimensions of from about 0.1 µm to about 10 µm.

In one embodiment of the present invention, the diffractive structure is embossed on an embossable resin layer made of such materials as, polyvinyl chloride or polymethacrylate. The embossable layer may also provide functionality of a hardcoat/release layer. The embossing may be either patterned or continuous.

In another embodiment of the present invention, the diffractive structure comprises a grating formed in a substrate, preferably a light transmissive or essentially transparent substrate, which may be made of type G PET, Polycarbonate Oriented Polypropylene (OPP), Polyvinyl Chloride or other suitable plastic material. By way of example, a PET layer has a thickness of 6-25 microns.

Alternatively, the patterned structure comprises a holographic pattern formed by embossed metal particles or optical stack flakes, as disclosed in Patent Nos. 5,624,076 and 5,672,410 to Miekka et al. Alternatively, the embossed particles can be metal-dielectric pigments.

Optionally, for improved visibility of holographic effects, the aforementioned structures have some form of reflective material underneath, either a highly reflective metal like Al, or other metals, or a high index layer made of ZnS, TiO2, or ZrO2.

A security label formed on the surface of an object is designed to be viewed from the side of a patterned structure, thus for the OV effect provided by the underlining OV coating to be visible, the patterned structure has to have light transmissive regions.

In one embodiment of the present invention, the diffractive structure comprises a patterned opaque layer having one or more light transmissive regions, or windows, to allow optical effects provided by the optically variable coating be visible through said windows when the device is viewed from the side of the diffractive structure. Preferably, the windowed coating is reflective to provide a highly reflective holographic image with an optically variable background.

The reflective layer underneath the diffractive structure can be patterned by demetallization, as it is known to one skilled in the art. A demetallized layer can be made of Al, Cu, Ni, and other metals and metal alloys that have been patterned by demetallization. Various techniques may be used to pattern the metal layer, such as chemical etching or oil ablation in vacuum, preferably, both done in registration with the relief image.

The method of demetallization allows making intricate, lace-like patterns as well as patterns with relatively wide windows. While lace-like patterns are more difficult to reproduce, for example by a metallic pen, windows of larger size, by way of example at least 1mm wide and preferably at least 5 mm wide, to allow more of the OV background to be visible.

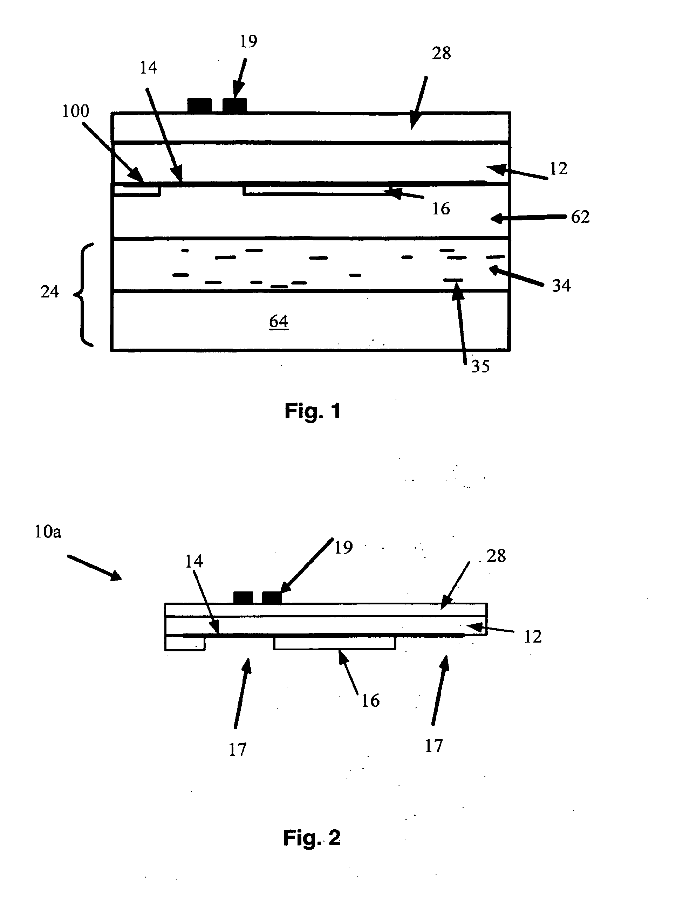

In one embodiment of the present invention, shown in Fig. 1, a patterned structure used for forming a security label is a diffractive structure with a windowed reflective layer. The structure shown in Fig. 1 is a result of adhesively joining the diffractive structure to an object 24 with adhesive layer 62. The object 24 has an OV coating of carrier 34 with OV flakes 35 suspended within the carrier 34, applied onto the surface of object 64. The diffractive structure is formed on substrate 12, which can be a resin/hardcoat layer and has grating 14 thereon partially coated with a pattern of highly reflective coating 16 in contact with portions of grating 14, for preventing light from passing therethrough. Resin layer 12 is optionally covered with protective light transmissive layer 28 with opaque indicia 19 printed thereon. Preferably, grating 14 is embossed onto substrate 12 and covered with patterned demetallized aluminum 16, and then the demet hologram is hot stamped or hot roll nipped to the object 24 using clear hot stamp adhesive 62. The uncoated portions of the hologram are substantially light transmissive.

Preferably, reflective layer 16 is windowed, so that substrate 12 has one or more regions 100 thereon, embossed and covered with reflective material, said regions separated by regions 17 shown in Fig. 2, not covered with aluminum and can be either embossed or not-embossed.

When the structure shown in Fig. 1 is viewed from the top, it provides a highly-reflective holographic image having windows wherein a color shifting background shows. The combined optical effect is enhanced by printed indicia.

It is preferable to pattern reflective layer 16, because it is easier to emboss the whole region, then pattern the reflective layer, and then apply the optically matching adhesive. Alternatively, the continuous reflective coating is shifted to one side; the resulting structure has planar reflective coating over non-embossed regions, providing highly reflective mirror-like portions of the image as an additional optical effect.

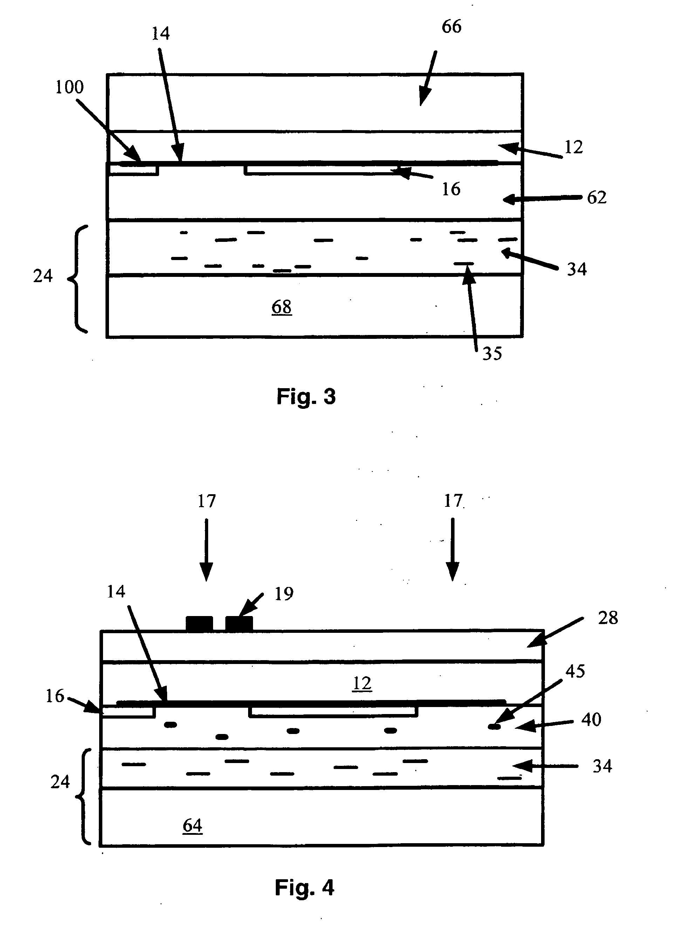

With reference to Fig. 3, in another embodiment of the present invention, object or substrate 68 is a banknote or any other type security document. A security structure is formed by printing a color shift ink onto banknote 68 as a background color, and then hot stamping a demet hologram, preferably embossed onto resin/hardcoat layer 12 and supported by carrier sheet 66, over the ink using transparent hot stamp adhesive 62.

Optionally, adhesive 62 contains other particles or flakes to modify the color of the color shift ink or as a covert security feature. By way of example, adhesive 62 may contain fluorescent materials, covert charms, such as disclosed in U.S. Patent Application 20050037192 by Argoitia et al, upshift phosphors, interference pigments like mica-based interference flakes, and non-shifting pigments or dyes. The covert flakes are detectable under a microscope, whereas for the fluorescent and phosphor materials, irradiation of the device by UV or IR light is required to activate those features. Since resin/hardcoat layer 12 is quite thin, preferably less than 3 microns, the UV or IR light is able to penetrate to the particles in adhesive 62. In Fig. 3, a release layer, resin layer and hard coat are shown as one layer 12 providing functionality of each of the three layers. In other embodiments, layer 12 is replaced by any combination of separate layers: a resin layer for embossing, a release layer for releasing the demet hologram from carrier sheet 66, and a hard coat layer for durability of the transferred device.

In another embodiment of the present invention shown in Fig. 4, covert flakes 45 that cannot be seen with the unaided eye are mixed into hot stamp adhesive 40 used to bond the two structures together as in the previous embodiments. The examples of covert flakes include, but not limited to, charms or taggants as taught in United States patent application publication number 2006/0035080, shaped pigments as disclosed in United States patent application publication number 20060035080, magnetic flakes, fluorescent pigments, standard UV activated to form visible light, or specialized anti-Stokes materials UV activated to form visible light.

These covert flakes serve as a means of authentication. If the covert flakes provide an optical effect, for example under a microscope or being IR activated, additionally to holographic effects exhibited by this structure, though the windows where the A1 coating is missing, covert flakes 45 can be seen on color shifting background. In another embodiment, optically variable flakes are added to adhesive 40 at low concentrations so that the OV foil colors are modified when viewing from the top.

The structure shown in Fig. 4, when viewed from the top, provides a highly-reflective holographic image formed by pattern 14, and a color-shifting background visible in the windows. Covert flakes 45 are visible in UV or IR light, or under a microscope. The cover flakes appear within the windows on the color shifting background. If substrate 64 is transparent or light transmissive, then, through substrate 64, one can see a color shift with a faint reflection hologram where aluminum 16 is present and indicia 19 where aluminum 16 is absent.

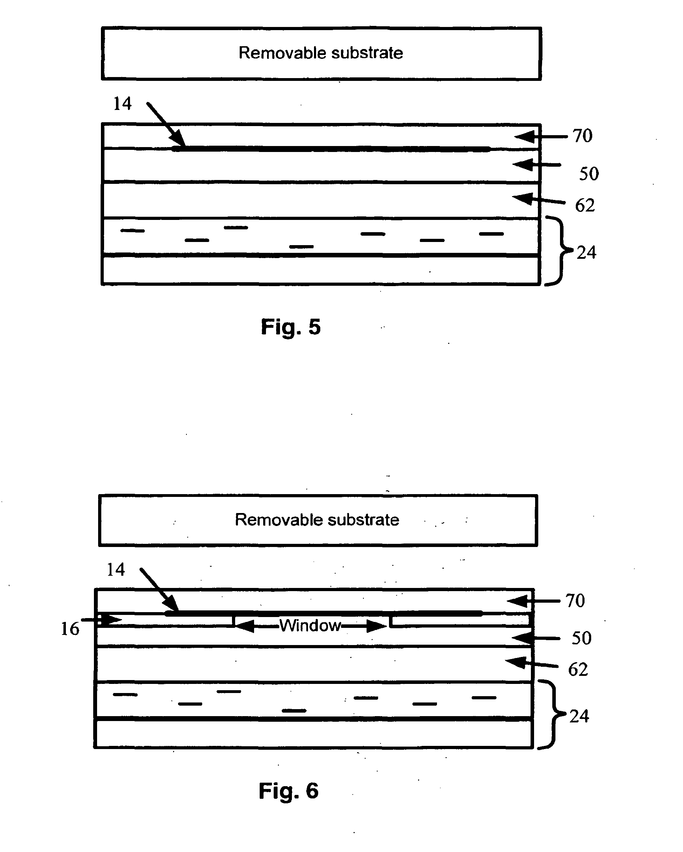

In one embodiment of the present invention, shown in Fig. 5, the diffractive structure comprises a light transmissive hologram, formed by relief pattern 14 embossed in light transmissive hardcoat/resin layer 70, and a high refraction index layer 50 disposed between adhesive layer 62 and embossed relief pattern 14 for preventing index matching between adhesive 62 and resin 70. The high refraction index layer 50 is made of a material having an index of refraction no less than 1.65, by way of example, the high refractive index layer can be made of ZnS, TiO2, ZrO2, etc.

When forming a security label, the diffractive structure made of resin layer 70 with relief 14, covered with high index coating 50 and adhesive 62, is coupled to an object 24 having a coating of OV ink, for example color shifting ink. Optionally, the diffractive structure can be formed on a removable substrate, or resin/hardcoat layer 70 can serve as a substrate for the diffractive structure. Preferably, the diffractive structure is coupled to the object by hot stamping, and adhesive 62 is a dry hot stamp adhesive.

In operation, when the security label formed in accordance with this embodiment is irradiated with light, one portion of light reflects at the surface dividing resin layer 70 and high index layer 50, and forms a holographic non-OV image. Another portion of light propagates through high index layer 50 and adhesive 62 to the OV coating and reflects back to a top surface of resin layer 70 carrying a color-shifting effect from the OV coating as well as a holographic image. Thus, the security label provides a color shifting holographic image by combining the effects of the optically variable and diffractive structures, wherein a visual effect is produced by an interaction between light reflecting from the optically variable ink and light diffracted from the diffractive structure.

In another embodiment of the present invention, the diffractive structure comprises a semitransparent reflective layer replacing high-index layer 50 in Fig. 5. Optical effects provided by this embodiment are very similar to the aforedescribed effects of the embodiment shown in Fig. 5 and comprising a high-index layer.

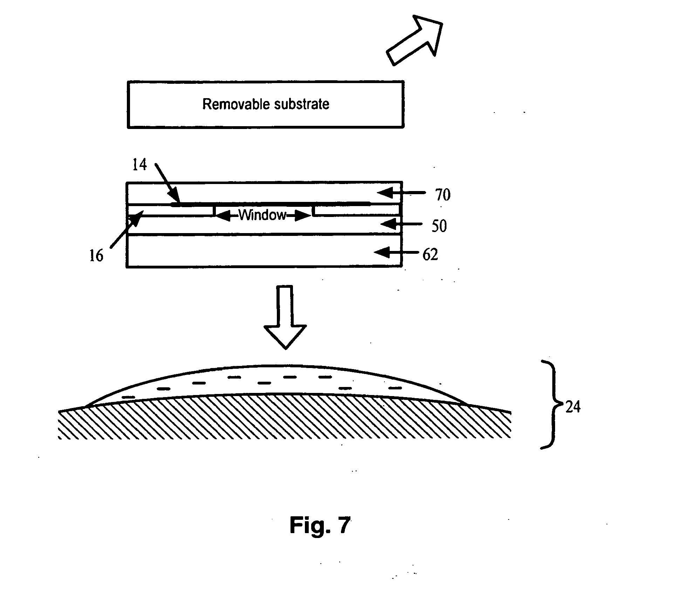

In another embodiment of the present invention shown in Fig. 6, a diffractive structure includes grating 14 supported by, or formed therein, hardcoat/resin layer 70, patterned reflective layer 16, and a layer of high refraction index material 50. A security label is formed by hot stamping this diffractive structure over an object 24 covered with OV ink. The process of forming such security label on a surface of an object, for example a printed banknote, is schematically shown in Fig. 7.

When viewed from the top, as shown in Fig. 6, this structure provides an image with a combination of optical effects. One part of the image is a specular holographic image formed by light reflected from opaque metallic layer 16. This part of the image is complemented by a color shifting specular holographic image formed by light reflecting from the regions where reflective layer 16 has windows, so that the corresponding portion of the image is produced by an interaction between light reflecting from the optically variable ink and light diffracted from the diffractive structure having a high index layer and exhibits optical effects provided by both, the diffractive structure and the OV coating.

In a structure similar to the structure shown in Fig. 6 but without a high refraction index coating, regions wherein reflective layer 16 has windows, show very weak holographic effects or no holographic effects. If the adhesive 62 has a complete index match to the resin layer 70, then no holographic effects will be seen. This is very much dependent upon the degree of index matching between the coating underlying the non-aluminized portion of the hologram and the adhesive. If there is a refractive index differential of at least 0.2 for the real part of the refractive index, then some holographic effects will be seen. The greater the refractive index differential, the more clearly the hologram will be seen. By way of example, a refractive index differential of 0.8, between a substrate with n=1.5 and a high index coating with n=2.3, provides brightness of a transparent hologram.

In reference to Figs. 5 and 6, high refraction index coating 50 has an index of refraction no less than 1.65. Suitable examples of such a high index transparent layer include TiO.sub.2 or ZnS.

In the aforedescribed embodiments wherein a diffractive structure comprises a semi transparent reflective layer or a high refraction index layer, the holographic image formed by the label is at least in part a color shifting holographic image. The color shifting part of the holographic image is formed by interaction of light diffracted by the diffractive structure and light reflected by the OV coating, whereby this part of the image exhibits a synergy of holographic and optically variable effects. The colors resulting from the interaction of diffractive light and thin film interference light may add or subtract to the diffractive colors resulting in a unique optical spectrum as a function of viewing angle.

In another embodiment of the present invention, alternatively to hot-stamping, a UV activated adhesive is used to bond the two structures together. By way of example, an object or substrate printed with color shifting ink and with an adhesive over the ink, is brought together with a laminating sheet containing the demet hologram; the adhesive is then cured by irradiating the laminating sheet with UV light or electron beam, wherein the laminating sheet has a transparent or at least UV-transmissive substrate. One way to overcome the obstacle to UV light posed by the reflective metal covering the hologram, is to use a patterned or windowed reflective layer wherein areas covered with metal are very narrow, estimated to be less than 2 microns, so that UV light can cure the adhesive by coming in at an angle. Another way is to use e-beam curing. Alternatively, semitransparent reflective layer or a high index layer will allow some UV light through to the adhesive layer.

In one embodiment of the present invention, adhesive layer is patterned so that the patterned structure has regions not bonded to the optically variable coating on the object or substrate.

In another embodiment of the present invention, adhesive and OV ink are printed onto different regions on the surface of the object, and a patterned structure is bonded to the object with the adhesive forming a frame, or a part of it, around the OV coating.

In one embodiment of the present invention, an article is formed by covering a light transmissive substrate with OV ink and then adhesively bonding, preferably by hot-stamping, to a diffractive structure, wherein the diffractive structure is a hologram underlined with a reflective layer such that both reflects light and allows light therethrough to provide optical coupling between the OV coating and the hologram. Preferably, the OV ink is a color shifting ink printed onto the substrate, the bonding method is hot stamping, and the reflective layer is aluminum patterned by demetallization. Alternatively, the reflective layer is a semitransparent metal layer, or a high index dielectric coating. The substrate is either opaque or light transmissive.

A light transmissive substrate, preferably made of PET, provides for viewing the device from both sides, which is advantageous if the optically variable coating is light transmissive, i.e. formed by a light transmissive OV ink, for example having a low density of optically variable flakes incorporating opaque Fabry Perot filters, or one based on all dielectric transparent optically variable flakes, or an ink comprising absorber-spacer-absorber flakes disclosed in U.S. Pat. No. 5,278,590 in the name of Phillips et al. When this construction is viewed through the OV ink covered substrate, a superposition of the holographic and optically variable effects is visible, i.e. one can see a color shift with a faint reflection hologram where aluminum is present. In essence, the rainbow of colors that were in the initial hologram has been modified by the OV structure, whereby some colors are accentuated and some are suppressed. When this structure is viewed from the side of the diffractive structure, one can see a highly-reflective holographic image with a color-shifting background visible in windows of the reflective layer covering the hologram. This construction is particularly adapted to banknotes employing transparent plastic substrates where both sides can be viewed.

In another embodiment of the present invention, an optically variable foil comprising OV ink coating is hot stamped, or adhesively bonded by another method, to a demetallized hologram. Alternatively, the hologram can be coated with semitransparent reflective layer, patterned or non-patterned, or a coating of a high index material, as it was described before.

## Claims

1. A method of forming a label on an object (64), comprising a step of coating a surface of the object with optically variable ink (34,35), and **characterized by** a step of hot-stamping a patterned structure (12,14,16) with a light transmissive hot-stamping adhesive (62) over the optically variable ink, wherein the patterned structure allows light to propagate there through, whereby the label, when irradiated with light, forms an image having an optically variable background.

2. A method as defined in claim 1, **characterized in that** the patterned structure is a diffractive structure, whereby an image formed by the label exhibits a diffractive effect provided by the diffractive structure and an optically variable effect provided by the optically variable ink.

3. A method as defined in claim 2, **characterized in that** the diffractive structure comprises one of:
a semitransparent reflective layer, and
a high refraction index layer made of a material having an index of refraction greater than about 1.65, and
a patterned reflective coating having reflective regions and light transmissive windows between the reflective regions for allowing light incident on the diffractive structure to propagate through to the optically variable ink.

4. A method as defined in claim 2, **characterized in that** the diffractive structure comprises one of: a hologram, a demetallized hologram, a diffraction grating, a refraction pattern, a Kinegram® device, a Pixelgram® device, corner cube reflectors, a zero order diffraction structure, a moire pattern, a light interference pattern based on microstructures having dimensions in a range from about 0.1 m to about 10 m, and a holographic pattern formed by embossed particles or optical stack flakes.

5. A method as defined in claim 1, **characterized in that** the object is one of: a paper document, a banknote, and a container.

6. A method as defined in claim 1, **characterized in that** the light transmissive hot-stamping adhesive is a clear adhesive,
an adhesive having covert flakes therein or thereon, or
an adhesive comprising pigment particles.

7. A method as defined in claim 1, **characterized in that** a coating of the light transmissive hot-stamping adhesive is patterned so that at least one region between the diffractive structure and the optically variable structure is absent an adhesive material.

8. A method as defined in claim 1, **characterized in that** the optically variable ink is printed onto the object.

9. A method as defined in claim 1, **characterized in that** the optically variable ink consists essentially of a carrier having optically variable flakes therein.

10. A method as defined in claim 9, **characterized in that** the optically variable flakes are one of: color shifting flakes, reflective flakes, magnetic reflective flakes, and magnetic color shifting flakes.

11. A method as defined in claim 1, **characterized in that** the optically variable ink comprises a tinted carrier.

12. A method as defined in claim 1, **characterized in that** the optically variable ink contains magnetic optically variable flakes or magnetic particles.

13. An article comprising
a substrate,
a coating of optically variable ink applied onto the substrate,
a diffractive structure adhesively bonded over the coating of optically variable ink, and
a hot-stamping adhesive layer for bonding the diffractive structure to the coating of optically variable ink,
**characterized in that**
the diffractive structure comprises a reflective layer such that, when the article is irradiated with light, a first portion of light is reflected by the reflective layer and a second portion of light propagates through the reflective layer to the coating of optically variable ink, and
the first and second portions of the light after being reflected by the reflective layer and the coating of optically variable ink, respectively, form a specular image having an optically variable feature.

14. An article as defined in claim 13, **characterized in that** the reflective layer is one of:
a semitransparent reflective layer,
a reflective layer patterned by demetallization, and
a segmented reflective layer having a reflective material absent in one or more regions, so that when the diffractive structure is irradiated with light, the one or more regions allow light through to the coating of the optically variable ink whereas other regions of the diffractive structure reflect light and prevent light from passing there through.

15. An article as defined in claim 13, **characterized in that** the diffractive structure comprises one of: a hologram, a diffraction grating, a refraction pattern, a Kinegram® device, a Pixelgram® device, corner cube reflectors, a zero order diffraction structure, a moire pattern, a light interference pattern based on microstructures having dimensions in a range from about 0.1 m to about 10 m, a holographic pattern formed by embossed particles or optical stack flakes, and a high refraction index layer made of a material having the index of refraction greater than about 1.65 disposed between the diffractive structure and the hot-stamping adhesive layer.

16. An article as defined in claim 13, **characterized in that** the substrate is a paper substrate, a plastic substrate, a cardboard substrate, and a metal substrate.

17. An article as defined in claim 13, **characterized in that** the hot-stamping adhesive layer comprises
a clear adhesive,
an adhesive having covert flakes therein or thereon, or
an adhesive comprising pigment particles.

18. An article as defined in claim 13, **characterized in that** a coating of the hot-stamping adhesive layer is patterned so that at least one region between the diffractive structure and the optically variable structure is absent an adhesive material.

19. An article as defined in claim 18, **characterized in that** the hot-stamping adhesive layer is adjoined to the substrate solely in regions absent of the optically variable ink, whereby the diffractive structure is coupled to the coating of optically variable ink by pressure.

20. An article as defined in claim 13, **characterized in that** the coating of optically variable ink is applied directly onto the substrate.

21. An article as defined in claim 13 wherein an additional coating is disposed onto the substrate under the coating of optically variable ink, **characterized in that** the additional coating is a coating of ink, paint, or lacquer.

22. An article as defined in claim 13, **characterized in that** the optically variable ink consists essentially of a carrier having color shifting flakes therein.

23. An article as defined in claim 13, **characterized in that** the optically variable ink consists essentially of a colored carrier having reflective flakes therein.

## Patentansprüche

1. Verfahren zur Bildung einer Kennzeichnung auf einem Gegenstand (64), das einen Schritt der Beschichtung einer Fläche des Gegenstands mit optisch variabler Tinte (34, 35) umfasst und durch einen Schritt des Heißprägens einer gemusterten Struktur (12, 14, 16) mit einem lichtdurchlässigen Klebstoff für das Heißprägen (62) über die optisch variable Tinte charakterisiert ist, wobei es die gemusterte Struktur zulässt, dass sich Licht durch sie verbreitet, wobei die Kennzeichnung, wenn sie mit Licht bestrahlt wird, ein Bild mit einem optisch variablen Hintergrund bildet.

2. Verfahren nach Anspruch 1, dadurch charakterisiert, dass die gemusterte Struktur eine diffraktive Struktur ist, wobei ein von der Kennzeichnung gebildetes Bild einen diffraktiven Effekt, der von der diffraktiven Struktur ermöglicht wird und einen optisch variablen Effekt, der von der optisch variablen Tinte ermöglicht wird, aufweist.

3. Verfahren nach Anspruch 2, dadurch charakterisiert, dass die diffraktive Struktur eines der Folgenden umfasst:
eine halbtransparente Reflexionsschicht und
eine Schicht mit hohem Brechungsindex, die aus einem Material hergestellt wird, das einen Brechungsindex aufweist, der größer als ungefähr 1,65 ist und
eine gemusterte reflektierende Beschichtung, die reflektierende Bereiche und lichtdurchlässige Fenster zwischen den reflektierenden Bereichen aufweist, damit sich auf die diffraktive Struktur einfallendes Licht durch die optisch variable Tinte verbreiten kann.

4. Verfahren nach Anspruch 2, dadurch charakterisiert, dass die diffraktive Struktur eines der Folgenden umfasst: ein Hologramm, ein entmetallisiertes Hologramm, ein Diffraktionsgitter, ein Brechungsmuster, eine Kinegram®-Vorrichtung, eine Pixelgram®-Vorrichtung, Würfeleckreflektoren, eine Diffraktionsstruktur nullter Ordnung, ein Moire-Muster, ein Lichtinterferenzmuster, das auf Mikrostrukturen basiert, die Größenordnungen in einem Bereich von ungefähr 0,1 m bis ungefähr 10 m aufweisen und ein holographisches Muster, das aus geprägten Partikeln oder Flocken optischer Stapel gebildet wird.

5. Verfahren nach Anspruch 1, dadurch charakterisiert, dass der Gegenstand eines der Folgenden ist: ein Papierdokument, eine Banknote und ein Behälter.

6. Verfahren nach Anspruch 1, dadurch charakterisiert, dass der lichtdurchlässige Klebstoff für das Heißprägen ein klarer Klebstoff,
ein Klebstoff mit verdeckten Flocken darin oder darauf oder
ein Klebstoff mit Pigmentpartikeln ist.

7. Verfahren nach Anspruch 1, dadurch charakterisiert, dass eine Beschichtung des lichtdurchlässigen Klebstoffs für das Heißprägen gemustert ist, sodass mindestens ein Bereich zwischen der diffraktiven Struktur und der optisch variablen Struktur keinen Klebstoff aufweist.

8. Verfahren nach Anspruch 1, dadurch charakterisiert, dass die optisch variable Tinte auf den Gegenstand gedruckt wird.

9. Verfahren nach Anspruch 1, dadurch charakterisiert, dass die optisch variable Tinte im Wesentlichen aus einem Trägerstoff besteht, der in sich optisch variable Flocken aufweist.

10. Verfahren nach Anspruch 9, dadurch charakterisiert, dass die optisch variablen Flocken eines der Folgenden sind: farbwechselnde Flocken, reflektierende Flocken, magnetische reflektierende Flocken und magnetische farbwechselnde Flocken.

11. Verfahren nach Anspruch 1, dadurch charakterisiert, dass die optisch variable Tinte einen gefärbten Trägerstoff umfasst.

12. Verfahren nach Anspruch 1, dadurch charakterisiert, dass die optisch variable Tinte magnetische optisch variable Flocken oder magnetische Partikel enthält.

13. Artikel, der Folgendes umfasst:
ein Substrat,
eine Beschichtung optisch variabler Tinte, die auf das Substrat aufgetragen wird,
eine diffraktive Struktur, die haftend über die Beschichtung optisch variabler Tinte geklebt wird
und
eine Schicht eines Klebstoffs für das Heißprägen für das Kleben der diffraktiven Struktur auf die Beschichtung optisch variabler Tinte,
dadurch charakterisiert,
dass die diffraktive Struktur eine Reflexionsschicht umfasst, sodass, wenn der Artikel mit Licht bestrahlt wird, ein erster Teil des Lichts durch die Reflexionsschicht reflektiert wird und sich ein zweiter Teil des Lichts durch die Reflexionsschicht zur Beschichtung optisch variabler Tinte ausbreitet und
die ersten und zweiten Teile des Lichts bilden jeweils, nachdem sie von der Reflexionsschicht und der Beschichtung optisch variabler Tinte reflektiert wurden, ein spiegelndes Bild mit einem optisch variablen Merkmal.

14. Artikel nach Anspruch 13, dadurch charakterisiert, dass die Reflexionsschicht eines der Folgenden ist:
eine halbtransparente Reflexionsschicht,
eine Reflexionsschicht, die durch Entmetallisierung gemustert ist und
eine gegliederte Reflexionsschicht, bei der ein reflektierendes Material in einem oder mehreren Bereichen nicht vorhanden ist, sodass die ein oder mehreren Bereiche, wenn die diffraktive Struktur mit Licht bestrahlt wird, Licht durch die Beschichtung der optisch variablen Tinte zulassen, während andere Bereiche der diffraktiven Struktur Licht reflektieren und verhindern,
dass Licht durch sie gelangen kann.

15. Artikel nach Anspruch 13, dadurch charakterisiert, dass die diffraktive Struktur eines der Folgenden umfasst: ein Hologramm, ein Diffraktionsgitter, ein Brechungsmuster, eine Kinegram®-Vorrichtung, eine Pixelgram®-Vorrichtung, Würfeleckreflektoren, eine Diffraktionsstruktur nullter Ordnung, ein Moire-Muster, ein Lichtinterferenzmuster, das auf Mikrostrukturen basiert, die Größenordnungen in einem Bereich von ungefähr 0,1 m bis ungefähr 10 m aufweisen, ein holographisches Muster, das aus geprägten Partikeln oder Flocken optischer Stapel gebildet wird und eine Schicht mit hohem Brechungsindex, die aus einem Material hergestellt wird, bei dem der Brechungsindex größer als ungefähr 1,65 ist, die zwischen der diffraktiven Struktur und der Schicht des Klebstoffs für das Heißprägen angeordnet ist.

16. Artikel nach Anspruch 13, dadurch charakterisiert, dass das Substrat ein Papiersubstrat, ein Kunststoffsubstrat, ein Pappsubstrat und ein Metallsubstrat ist.

17. Artikel nach Anspruch 13, dadurch charakterisiert, dass die Schicht des Klebstoffs für das Heißprägen Folgendes umfasst
einen klaren Klebstoff,
einen Klebstoff mit verdeckten Flocken darin oder darauf oder
einen Klebstoff mit Pigmentpartikeln.

18. Artikel nach Anspruch 13, dadurch charakterisiert, dass eine Beschichtung der Schicht des Klebstoffs für das Heißprägen gemustert ist, sodass mindestens ein Bereich zwischen der diffraktiven Struktur und der optisch variablen Struktur keinen Klebstoff aufweist.

19. Artikel nach Anspruch 18, dadurch charakterisiert, dass die Schicht des Klebstoffs für das Heißprägen ausschließlich in Bereichen an das Substrat angrenzt, welche die optisch variable Tinte nicht aufweisen, wobei die diffraktive Struktur mit der Beschichtung optisch variabler Tinte über Druck verbunden ist.

20. Artikel nach Anspruch 13, dadurch charakterisiert, dass die Beschichtung optisch variabler Tinte direkt auf das Substrat aufgetragen wird.

21. Artikel nach Anspruch 13, wobei eine zusätzliche Beschichtung unter der Beschichtung optisch variabler Tinte auf dem Substrat angeordnet ist, dadurch charakterisiert, dass die zusätzliche Beschichtung eine Beschichtung aus Tinte, Farbe oder Lack ist.

22. Artikel nach Anspruch 13, dadurch charakterisiert, dass die optisch variable Tinte im Wesentlichen aus einem Trägerstoff besteht, der in sich farbwechselnde Flocken aufweist.

23. Artikel nach Anspruch 13, dadurch charakterisiert, dass die optisch variable Tinte im Wesentlichen aus einem gefärbten Trägerstoff besteht, der in sich reflektierende Flocken aufweist.

## Revendications

1. Une méthode de formation d'une étiquette sur un objet (64), comprenant une étape de revêtement d'une surface de l'objet avec une encre optiquement variable (34, 35), et **caractérisée par** une étape d'estampage à chaud d'une structure à dessin (12, 14, 16) avec un adhésif d'estampage à chaud (62) transmettant la lumière sur l'encre optiquement variable, la structure à dessin permettant la propagation de la lumière à travers, l'étiquette formant, lorsqu'elle est irradiée par la lumière, une image présentant un fond optiquement variable.

2. Une méthode selon la revendication 1, **caractérisée par le fait que** la structure à dessin est une structure diffractive, une image formée par l'étiquette présentant un effet diffractif assuré par la structure diffractive, et un effet optiquement variable assuré par l'encre optiquement variable.

3. Une méthode selon la revendication 2, **caractérisée par le fait que** la structure diffractive comprend un des suivants :
une couche réfléchissante semi-transparente ; et
une couche à indice de réfraction élevé, réalisée avec un matériau présentant un indice de réfraction supérieur à environ 1,65 ; et
un revêtement réfléchissant à dessin, présentant des zones réfléchissantes et des fenêtres transmettant la lumière entre les zones réfléchissantes, afin de permettre à la lumière incidente sur la structure diffractive de se propager à travers l'encre optiquement variable.

4. Une méthode selon la revendication 2, **caractérisée par le fait que** la structure diffractive comprend un des suivants : hologramme ; hologramme dé-métallisé, réseau de diffraction ; modèle de réfraction ; dispositif Kinegram® ; dispositif Pixelgram® ; réflecteurs coin de cube ; structure de diffraction d'ordre zéro ; moirage ; modèle d'interférence de la lumière basé sur des microstructures dont la taille est comprise entre environ 0,1 m et environ 10 m ; et dessin holographique composé de particules en relief ou des flocons d'empilement optique.

5. Une méthode selon la revendication 1, **caractérisée par le fait que** l'objet est un des suivants : un document papier ; un billet de banque ; et un récipient.

6. Une méthode selon la revendication 1, **caractérisée par le fait que** l'adhésif d'estampage à chaud (62) à transmission de la lumière est un adhésif transparent,
un adhésif contenant des flocons à l'intérieur ou sur sa surface ; ou
un adhésif comprenant des particules de pigment.

7. Une méthode selon la revendication 1, **caractérisée par le fait que** le dessin d'un revêtement d'adhésif d'estampage à chaud à transmission de la lumière est tel qu'au moins une zone située entre la structure diffractive et la structure optiquement variable est dénuée d'une matière adhésive.

8. Une méthode selon la revendication 1, **caractérisée par le fait que** l'encre optiquement variable est imprimée sur l'objet.

9. Une méthode selon la revendication 1, **caractérisée par le fait que** l'encre optiquement variable est composée essentiellement d'un support sur lequel se trouvent des flocons optiquement variables.

10. Une méthode selon la revendication 9, **caractérisée par le fait que** les flocons optiquement variables sont soit : des flocons à couleur changeante ; des flocons réfléchissants ; des flocons réfléchissants magnétiques ; et des flocons à couleur changeante magnétiques.

11. Une méthode selon la revendication 1, **caractérisée par le fait que** l'encre optiquement variable comprend un support teinté.

12. Une méthode selon la revendication 1, **caractérisée par le fait que** l'encre optiquement variable comprend des flocons optiquement variables magnétiques ou des particules magnétiques.

13. Un article comprenant
un substrat,
un revêtement d'encre optiquement variable appliquée sur le substrat,
une structure diffractive collée sur le revêtement d'encre optiquement variable, et une couche d'adhésif d'estampage à chaud pour l'adhérence de la structure diffractive au revêtement d'encre optiquement variable,
**caractérisé par le fait que**
la structure diffractive comprend une couche réfléchissante telle que lors de l'irradiation de l'article par de la lumière, une première partie de la lumière est réfléchie par la couche réfléchissante, et une deuxième partie de la lumière se propage à travers la couche d'encre optiquement variable, et
après avoir été réfléchies par la couche réfléchissante et le revêtement d'encre optiquement variable respectivement, les première et deuxième parties de la lumière forment une image spéculaire présentant une caractéristique optiquement variable.

14. Un article selon la revendication 13, **caractérisé par le fait que** la couche réfléchissante est soit :
une couche réfléchissante semi-transparente ; soit
une couche réfléchissante aux motifs réalisés par dé-métallisation ; soit
une couche réfléchissante segmentée possédant une matière réfléchissante absente d'une ou plusieurs zones, de sorte que lors de l'irradiation de la structure diffractive par la lumière, la ou les différentes zones permettent le passage de la lumière à travers le revêtement d'encre optiquement variable tandis que d'autres zones de la structure diffractive reflètent la lumière et empêchent le passage de la lumière par celle-ci.

15. Un article selon la revendication 13, **caractérisé par le fait que** la structure diffractive comprend un des suivants : hologramme ; hologramme dé-métallisé, réseau de diffraction ; modèle de réfraction ; dispositif Kinegram® ; dispositif Pixelgram® ; réflecteurs coin de cube ; structure de diffraction d'ordre zéro ; moirage ; modèle d'interférence de la lumière basé sur des microstructures dont la taille est comprise entre environ 0,1 m et environ 10 m ; dessin holographique composé de particules en relief ou des flocons d'empilement optique ; et couche à indice de réfraction élevé, réalisée avec une matière avec un indice de réfraction supérieur à environ 1,65, disposée entre la structure diffractive et la couche d'adhésif d'estampage à chaud.

16. Un article selon la revendication 13, **caractérisé par le fait que** le substrat est un substrat de papier, un substrat de matière plastique, un substrat de carton et un substrat de métal.

17. Un article selon la revendication 13, **caractérisé par le fait que** la couche d'adhésif d'estampage à chaud comprend
un adhésif transparent,
un adhésif contenant des flocons à l'intérieur ou sur sa surface ; ou
un adhésif comprenant des particules de pigment.

18. Un article selon la revendication 13, **caractérisé par le fait qu'**un revêtement de la couche d'adhésif d'estampage à chaud possède un motif tel qu'au moins une zone située entre la structure diffractive et la structure optiquement variable est dénuée d'une matière adhésive.

19. Un article selon la revendication 18, **caractérisé par le fait que** la couche d'adhésif d'estampage à chaud est jointe au substrat seulement dans des zones dénuées d'encre optiquement variable, la structure diffractive étant couplée par pression au revêtement d'encre optiquement variable.

20. Un article selon la revendication 13, **caractérisé par le fait que** la couche d'encre optiquement variable est appliquée directement sur le substrat.

21. Un article selon la revendication 13, dans lequel un revêtement additionnel est disposé sur le substrat sous le revêtement d'encre optiquement variable, **caractérisé par le fait que** le revêtement additionnel est un revêtement d'encre, de peinture ou de laque.

22. Un article selon la revendication 13, **caractérisé par le fait que** la couche d'encre optiquement variable se compose essentiellement d'un support comprenant des flocons aux couleurs changeantes.

23. Un article selon la revendication 13, **caractérisé par le fait que** l'encre optiquement variable se compose essentiellement d'un support coloré à l'intérieur duquel se trouvent des flocons réfléchissants.
